Europäisches Patentamt

European Patent Office

Office européen des brevets

(19)

(11) Veröffentlichungsnummer: **0 331 791**
**A2**

(12) **EUROPÄISCHE PATENTANMELDUNG**

(21) Anmeldenummer: 88114494.3

(22) Anmeldetag: 06.09.88

(51) Int. Cl.⁴: **B64C 27/45** , **B64C 27/41**

(30) Priorität: 07.03.88 DE 3807436

(43) Veröffentlichungstag der Anmeldung:
13.09.89 Patentblatt 89/37

(84) Benannte Vertragsstaaten:
**DE ES FR GB IT NL**

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Mautz, Karlheinz**
**Brennerstrasse 13**
**D-8012 Ottobrunn(DE)**
Erfinder: **Schwarz, Alois**
**Ahornweg 21**
**D-8011 Putzbrunn(DE)**

(54) **Rotor, insbesondere eines Drehflügelflugzeugs.**

(57) Bei einem Rotor, insbesondere eines Drehflügel-flugzeugs, ist das einzelne Rotorblatt (2) über eine Blattwurzelhülse (5) mit je einem an einer Rotornabe (3) radial nach außen sich erstreckenden Rotorna-benarm (4) drehwinkelbeweglich verbunden, wobei dieser in die blattwurzelseitig geschlossen ausgebil-dete Blattwurzelhülse (5) eingeführt und diese am nabenseitigen Hülsenende mittels einer in Blatt-längsrichtung druckbelastbaren, die Blattwinkelbewe-gungen zulassenden elastomeren Lagerung (8) gegenüber dem Rotornabenarm (4) verschlossen ist. Damit werden im Falle einer Schmiermittelfüllung des Raumes (7) zwischen dem Rotornabenarm (4) und der Blattwurzelhülse (5) gesonderte Dichtungen eingespart.

EP 0 331 791 A2

## Rotor, insbesondere eines Drehflügelflugzeugs

Die Erfindung betrifft einen Rotor gemäß dem Oberbegriff des Patentanspuchs 1.

Bei einem derartigen z.B. durch die DE-PS 21 50 741 bekannten Rotor ist der einzelne Rotornabenarm eine Blattwinkellagerhülse, in welcher das zugeordnete Rotorblatt mit seiner Blattwurzelhülse über Wälzlager drehwinkelbeweglich angeordnet ist. Hierbei hat die Blattwurzelhülse zugleich die Funktion eines Blattbeschlages, für dessen hohle Bauform ein zwischen der Rotornabe und dem Rotorblatt (durch die Blattwurzelhülse hindurch) sich erstreckendes, in Blattlängsrichtung zugbelastbares und die Blattwinkelbewegungen zulassendes Verbindungsmittel ursächlich ist. Die hierbei als Blattwinkellager fungierenden Wälzlager haben in der gewählten paarweisen Anordnung je Rotorblatt den Vorteil, daß insoweit auf die Blattwinkelsteuerung praktisch keine Rückstellmomente aus der Blattschlag- und Blattschwenkbiegung wirken können. Allerdings setzt eine ausreichende Schmierung dieser Wälzlager eine Füllung des Raumes zwischen der Blattwurzel- und Blattwinkellagerhülse mit einem flüssigen Schmiermittel voraus, so daß zusätzlich Dichtungen erforderlich werden. Hierfür kommen bisher Wellendichtungen in Betracht, welche naturgemäß einem Verschleiß unterliegen und damit einer dauernden Wartung bedürfen. Beispielsweise ist ein Wechsel der Dichtungen vom Sommer- zum Winterbetrieb (bzw. umgekehrt) des Rotors erforderlich.

Der Erfindung liegt daher für einen Rotor der eingangs genannten Art die Aufgabe zugrunde, ohne solche speziellen wartungsbehafteten Dichtungen zwischen der Blattwurzelhülse und dem Rotornabenarm den von diesen begrenzten (Lager-)Raum im Falle einer Schmiermittelfüllung gegen einen Austritt von Schmiermittel zu sichern.

Diese Aufgabe ist beim gattungsgemäßen Rotor mit den kennzeichnenden Merkmalen des Patentanspruchs 1 gelöst. Demnach wird dem bekannten Rotor gegenüber durch den Ersatz des zugbelastbaren Verbindungsmittels zwischen der Rotornabe und dem Rotorblatt durch ein druckbelastbares Verbindungsmittel zwischen dem Rotornabenarm und Rotorblatt in Form einer elastomeren Lagerung erreicht, daß diese zugleich als Dichtung nutzbar ist. Die hierbei gewählte überlappte Anordnung des Rotornabenarmes in der Blattwurzelhülse ermöglicht den Verzicht auf jegliches weiteres Dichtungsmittel durch ein einfach geschlossenes blattwurzelseitiges Hülsenende.

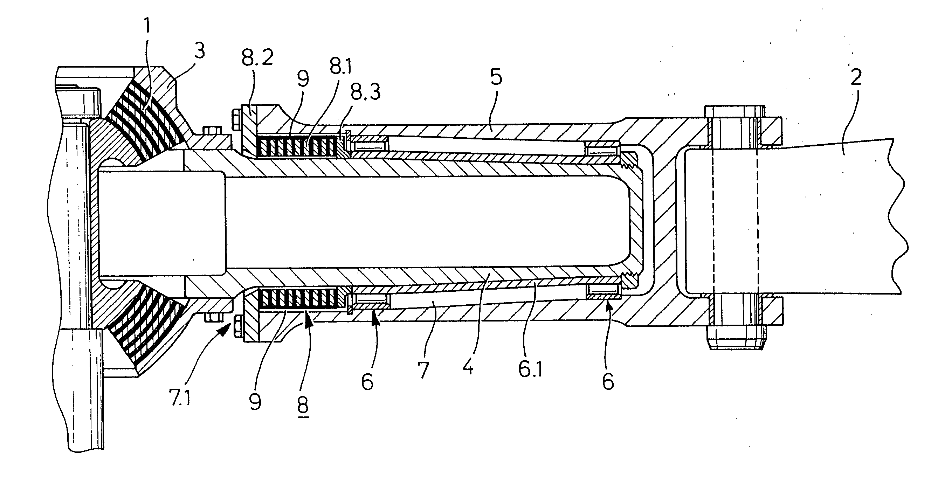

Im folgenden wird die Erfindung anhand eines Ausführungsbeispiels in Verbindung mit den in den Unteransprüchen gekennzeichneten zweckmäßigen Ausgestaltungen weiter erläutert. Hierbei zeigt die Zeichnung einen vertikalen Längsschnitt durch einen Rotorblattanschluß eines Drehflügelflugzeugs, z.B. ein Kippflügelflugzeug, mit einem gemeinsamen Blattschlaggelenk 1 für sämtliche Rotorblätter 2 im Rotorzentrum; ein derartiger sog. halbstarrer Rotor ist in der nicht vorveröffentlichten DE-Patentanmeldung P 38 04 203.7 beschrieben.

Für den Anschluß des einzelnen Rotorblattes 2 an einer dem Blattschlaggelenk 1 zugeordneten Rotornabe 3 ist daran jeweils ein radial nach außen sich erstreckender Rotornabenarm 4 befestigt, mit dem das zugeordnete Rotorblatt 2 zur Blattwinkelsteuerung drehwinkelbeweglich verbunden ist. Hierzu ist das Rotorblatt 2 mit einer Blattwurzelhülse 5 versehen, in welche der Rotornabenarm 4 unter Zwischenfügung zweier Wälzlager 6 als Blattwinkellager eingeführt ist. Diese Wälzlager 6 werden durch die auf das zugeordnete Rotorblatt 2 wirkenden Schlag- und Schwenkmomente belastet. Um dabei u.a. Reibung und Verschleiß gering zu halten, ist eine Schmierung vorgesehen, und zwar durch eine nicht dargestellte Füllung des Lager-Raumes 7 zwischen dem Rotornabenarm 4 und der Blattwurzelhülse 5 mit einem Schmieröl. Eine Maßnahme gegen einen Schmierölaustritt ist die Beschränkung dieses Raumes 7 auf eine verschließbare Öffnung 7.1 am in Fliehkraftwirkungsrichtung entgegengesetzten, also nabenseitigen Raumende infolge der gewählten überlappten Anordnung des Rotornabenarmes 4 durch die Blattwurzelhülse 5 sowie blattwurzelseitig geschlossenen Form der Blattwurzelhülse 5. Die zweite Maßnahme gegen einen Schmierölaustritt ist der Verschluß des Lager-Raumes 7 durch eine zugleich als Dichtung wirksame elastomere Lagerung 8, welche primär die Funktion einer die Blattfliehkräfte auf die Rotornabe 3 übertragenden Verbindung zwischen der Blattwurzelhülse 5 und dem Rotornabenarm 4 erfüllt, ohne dabei die Blattwinkelbewegungen zu behindern. Zu diesem Zweck weist die elastomere Lagerung 8 einen hohlzylindrischen elastomeren Lagerkörper 8.1 beispielsweise aus lagenweise abwechselnden Metall- und Gummischichten auf, welcher über einen ersten steifen Lagerring 8.2 mit der Blattwurzelhülse 5 und einen zweiten steifen Lagerring 8.3 mit dem Rotornabenarm 4 verbunden ist. Gegen das Schmieröl ist der Lagerkörper 8.1 an seiner hülsenseitigen Mantelfläche durch eine entsprechend resistente Deckschicht 9 beispielsweise aus Silikon geschützt. Zur Abstützung des zweiten Lagerringes 8.3 in Blattfliehkraftwirkungsrichtung ist für jenen ein Sitz auf dem Rotornabenarm 4 in Formschluß mit der Stirnseite eines in Erstreckungsrichtung desselben darauf feststehend anschließenden gemeinsamen Lagerinnenringes 6.1 der beiden Wälzlager 6 vorgesehen. Somit wird die Doppelfunktion der elastomeren Lagerung 8 mit baulich einfachen, zuverlässigen Maßnahmen bewirkt.

**Ansprüche**

1. Rotor, insbesondere eines Drehflügelflugzeugs, bei dem das einzelne Rotorblatt über eine Blattwurzelhülse mit je einem an einer Rotornabe radial nach außen sich erstreckenden Rotornabenarm drehwinkel,beweglich verbunden ist, **dadurch gekennzeichnet,** daß der Rotornabenarm (4) in die blattwurzelseitig geschlossen ausgebildete Blattwurzehülse (5) eingeführt und diese am nabenseitigen Hülsenende mittels iner in Blattlängsrichtung druckbelastbaren, die Blattwinkelbewegungen zulassenden elastomeren Lagerung (8) gegenüber dem Rotornabenarm (4) verschlossen ist.

2. Rotor nach Anspruch 1, **dadurch gekennzeichnet,** daß die elastomere Lagerung (8) einen hohlzylindrischen elastomeren Lagerkörper,8.1) zwischen einem mit der Blattwurzelhülse (5) verbundenen ersten steifen Lagerring (8.2) und einem mit dem Rotornabenarm (4) verbundenen zweiten steifen Lagerring (8.3) aufweist.

3. Rotor nach Anspruch 2, **gekennzeichnet** durch eine nabenarmseitige Verbindung des zweiten Lagerringes (8.3) durch einen Sitz auf dem Rotornabenarm (4) in Formschluß mit der Stirnseite eines in Erstreckungsrichtung des Rotornabenarmes (4) hierauf anschließenden Lagerinnenringes (6.1) eines der Blattwurzelhülse (5) und dem Rotornabenarm (4) zwischengefügten Blattwinkellagers (Wälzlager 6).

4. Rotor nach Anspruch 2, **dadurch gekennzeichnet,** daß der elastomere Lagerkörper (8.1) an seiner hülsenseitigen (äußeren) Mantelfäche eine schmiermittelresistente Deckschicht (9) aufweist.